# EUROPÄISCHE PATENTSCHRIFT

(11) **EP 1 036 079 B1**
(45) Veröffentlichungstag und Bekanntmachung des Hinweises auf die Patenterteilung: **31.07.2002**
(21) Anmeldenummer: 98963472.0
(22) Anmeldetag: 17.11.1998
(51) Int. Cl.: C07F 9/00

(54) **VERFAHREN ZUR ALKYLIERUNG VON ELEMENTAREM PHOSPHOR**
METHOD FOR ALKYLATING ELEMENTAL PHOSPHOR
PROCEDE POUR L'ALKYLATION DE PHOSPHORE ELEMENTAIRE

(30) Priorität: 28.11.1997 DE 19752736; 10.11.1998 DE 19851730
(43) Veröffentlichungstag der Anmeldung: 20.09.2000
(73) Patentinhaber: Clariant GmbH, 65929 Frankfurt am Main (DE)
(72) Erfinder: WEFERLING, Norbert, D-50354 Hürth (DE); STELZER, Othmar, D-42349 Wuppertal (DE); KOLBE, Günter, D-50169 Kerpen (DE)
(86) Internationale Anmeldenummer: EP9807363
(87) Internationale Veröffentlichungsnummer: WO9928326

(56) Entgegenhaltungen:
- DE-C- 19 604 195
- CHEMICAL ABSTRACTS, vol. 113, no. 21, 19. November 1990 Columbus, Ohio, US; abstract no. 191481s, KUDRYAVTSEVA, L.I.: "Alkylation ofphosphorus iodides. V. Preparative method for dialkylphosphinic acids" Seite 738; Spalte 1; XP002900415 & ZH. OBSHCH. KHIM., Bd. 60, Nr. 4, 1990, Seiten 833-837,
- CHEMICAL ABSTRACTS, vol. 113, no. 5, 30. Juli 1990 Columbus, Ohio, US; abstract no. 40845n, KUDRYAVTSEVA, L.I.: "Alkylation of phosphorus iodides. IV. Reactions of alkyl iodides with phosphorus and iodine mixtures" Seite 635; Spalte 2; XP002900416 & ZH. OBSHCH. KHIM., Bd. 60, Nr. 1, 1990, Seiten 74-79,
- BOYD, E.A. ET AL.: "Synthesis of alkyl phosphinic acids from silyl phosphonites and alkyl halides" TETRAHEDRON LETTERS, Bd. 35, Nr. 24, 9. Mai 1994, Seiten 4223-4226, XP002900417

## Beschreibung

Die Erfindung betrifft ein Verfahren zur Herstellung von Alkali- und/oder Erdalkalisalzen von Alkylphosphonigen Säuren und Dialkylphosphinsäuren aus elementarem gelbem Phosphor und Alkylhalogeniden.

Organische Phosphorverbindungen gewinnen zunehmend an technischer Bedeutung. Sie werden hauptsächlich zur Herstellung von Herbiziden oder als Herbizid selbst, als Extraktionsmittel und als Flammschutzmittel eingesetzt. Als Ausgangsmaterialien werden bevorzugt PH₃ und Phosphorhalogenide verwendet, die ihrerseits wiederum aus gelbem Phosphor hergestellt werden müssen.

Bisher sind nur wenige Verfahren bekannt, mit denen sich organische Phosphor- verbindungen mit mehr als einer Phosphor-Kohlenstoff-Bindung aus einfachen Ausgangsmaterialien herstellen lassen.

Die Umsetzung von rotem Phosphor im superbasischen Medium Dimethylsulfoxid/-Kaliumhydroxid (DMSO/KOH) mit Acetylenen oder Olefinen als Alkylierungsmittel (Trofimov et al., Phosphorus, Sulfür and Silicon 55, 271 ,1991) liefert bevorzugt Triorganylphosphane und -oxide.

Die Alkylierung von rotem Phosphor mit Acrylnitril führt unter den vorgenannten Bedingungen bei Ultrabeschallung des Reaktionsgemisches vorwiegend zu sekundärem Phosphanoxid. Wird 1,1-Diphenyletbylen eingesetzt, erhält man dabei tert. Phosphanoxid (30%), sek. Phosphanoxid (10 %) und Phosphinsäure (35 %) [D. Semenzin et al., Tetrahedron Leiters 35, 3297, 1994].

Auch ist versucht worden (Trofimov et al., Main Group Chem. News 4, 18, 1996, Phosphorus, Sulfur and Silicon, 109/110, 601, 1996), elementaren Phosphor in seiner roten Modifikation mit Alkylhalogeniden in Anwesenheit von Kaliumhydroxid, Wasser, Dioxan und einem Phasen-Transfer-Katalysator umzusetzen. Als Hauptprodukt wurden tert. Phosphanoxide gefunden (bis zu 75 % bei Benzylbromid, etwa 60 - 65 % bei Butylbromid). Als Nebenprodukte werden sek. Phosphanoxide und Phosphinsäureester mit 19 % bzw. 6 % erhalten, erstere aber nur in Anwesenheit von Zinkpulver als reduzierendem Agens.

Die vorgenannten Verfahren weisen jedoch den Nachteil auf, daß zunächst erst einmal der rote Phosphor oder aber Phosphororganische Zwischenprodukte hergestellt werden müssen. Diese Verfahren sind technisch sehr aufwendig und somit auch nicht wirtschaftlich, die erzeugten Produkte müssen oft mühsam nachgereinigt werden. Gerade die gezielte Herstellung bestimmter Verbindungen in hoher Ausbeute ist oftmals besonders schwierig.

Wesentlich günstiger wäre daher eine Synthese, die *direkt* von elementarem gelbem Phosphor ausgeht und unter Verwendung weiterer, technisch leicht verfügbarer Einsatzstoffe auf einfache Art und Weise zu den gewünschten Alkali- oder Erdalkalisalzen von Alkylphosphonigen Säuren und Dialkylphosphinsäuren führen würde.

Der Erfindung liegt daher die Aufgabe zugrunde, ein Verfahren zur Herstellung von Alkali- und/oder Erdalkalisalzen von Alkylphosphonigen Säuren und Dialkylphosphinsäuren zur Verfügung zu stellen, das die vorgenannten Nachteile vermeidet und mit dem sich die gewünschten Endprodukte in den entsprechenden Mengenverhältnissen problemlos herstellen lassen.

Diese Aufgabe wird gelöst durch ein Verfahren der eingangs beschriebenen Art, dadurch gekennzeichnet, daß die Reaktion in Gegenwart von wäßrigem Alkali- oder Erdalkalihydroxid oder Gemischen davon erfolgt.

Bevorzugt wird die Reaktion in einem Zwei-Phasen-System aus wäßrigem Alkali- oder Erdalkalihydroxid oder Gemischen davon und einem organischen Lösungsmittel durchgeführt.

Bevorzugt werden als Alkylhalogenide Methylchlorid oder Methylbromid eingesetzt.

Bevorzugt werden als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, verwendet.

Besonders bevorzugt wird als organisches Lösungsmittel Toluol, allein oder in Kombination mit Alkoholen, verwendet.

Bevorzugt wird die Reaktion in Anwesenheit eines Phasen-Transfer-Katalysators durchgeführt.

Bevorzugt handelt es sich bei dem Phasen-Transfer-Katalysator um Tetraalkylphosphoniumhalogenide, Triphenylalkylphosphoniumhalogenide oder Tetraorganylammoniumhalogenide.

Bevorzugt beträgt die Temperatur bei der Reaktion -20 bis +60 °C.

Besonders bevorzugt beträgt die Temperatur 0 bis 30 °C.

Bevorzugt wird die Reaktion unter einem Druck von 0 bis 10 bar durchgeführt.

Bevorzugt wird das erfindungsgemäße Verfahren so ausgeführt, daß man den gelben Phosphor in einem Lösungsmittel oder einem Lösungsmittelgemisch suspendiert und dann mit Alkylhalogenid und einer Verbindung der Formel MOH oder M'(OH)₂ oder Gemischen davon, in denen M ein Alkalimetall und M' ein Erdalkalimetall bedeutet, umsetzt.

Bevorzugt werden der gelbe Phosphor und das Alkylhalogenid im molaren Verhältnis von 1:1 bis 1:3 miteinander umgesetzt, wobei das molare Verhältnis von gelbem Phosphor zur Verbindung der Formel MOH oder M'(OH)₂ 1:1 bis 1:5 beträgt.

Bevorzugt wird das nach der Umsetzung erhaltene Zwei-Phasen-System separiert und als wäßrige Phase weiterverarbeitet.

Die Erfindung betrifft auch die Verwendung der erfindungsgemäß hergestellten Alkali-und/oder Erdalkalisalze von Alkylphosphonigen Säuren und Dialkylphosphinsäuren zur Herstellung von Flammschutzmitteln, Extraktions- und Pflanzenschutzmitteln.

Überraschenderweise wurde gefunden, daß sich elementarer gelber Phosphor nach dem erfindungsgemäßen Verfahren mit Alkylhalogerüden im Zweiphasensystem (organisches Lösemittel/wäßriges Alkalihydroxid) und ggf. in Anwesenheit eines (Phasen-Transfer-) Katalysators unter äußerst milden Bedingungen zu einem Produktgemisch umsetzen läßt, das als Hauptprodukt das Salz der entsprechenden Alkylphosphonigen Säure RP(:O)HOH enthält. Als weitere, technisch nutzbare phosphorhaltige Produkte werden Salze der Hypophosphorigen und der Phosphorigen Säure gefunden, neben dem ebenfalls wertvollen Salz der Dialkylphosphinsäure R₂P(:O)OH.

Daneben können geringe Mengen an Trialkylphosphanoxid R₃P(:O), Dialkylphosphanoxid und nicht identifizierte Phosphorverbindungen entstehen, die auf übliche Weise aus dem Produktgemisch entfernt werden. Als Nebenprodukt entsteht ferner Wasserstoff, der problemlos aus dem Reaktionsgemisch abgetrennt werden kann.

Überraschenderweise entstehen nach dem erfindungsgemäßen Verfahren weder Phosphin (PH₃) noch Alkylphosphane (RPH₂, R₂PH) in nennenswerten Mengen. Durch Wahl geeigneter Reaktionsbedingungen - wie dem Hinzufügen geringer Anteile von Alkoholen zur org. Phase - wird die Bildung sämtlicher nicht identifizierter phosphorhaltiger Nebenprodukte zugunsten der drei Hauptprodukte, nämlich den Salzen der Alkylphosphonige Säure, der Hypohosphorigen Säure und der Phosphorigen Säure, auf ein überraschend geringes Maß von wenigen Mol% des eingesetzten gelben Phosphors minimiert.

Das erfindungsgemäße Verfahren kann beispielsweise so ausgeführt werden, daß man das Lösungsmittel zusammen mit dem Phasen-Transfer-Katalysator vorlegt und ggf. über den Schmelzpunkt des gelben Phosphors hinaus erwärmt, dann den elementaren (gelben) Phosphor zufügt, das Gemisch unter starkem Rühren auf Temperaturen von beispielsweise -10 bis +30 °C abkühlt und anschließend das Alkylhalogenid zufügt.

Die Reaktion wird durch Zugabe von Alkalilauge gestartet. Nach Beendigung der Reaktion kann das Reaktionssystem beispielsweise mit Wasser verdünnt werden und anschließend werden die leichtflüchtigen Anteile (H₂, PH₃, RPH₂, R₂PH und überschüssiges Alkylhalogenid etc.) entfernt.

Man erhält hiernach ein wäßrig/organisches Zwei-Phasen-System, dessen Phasen getrennt werden. Die Inhaltsstoffe aus den Phasen werden analytisch bestimmt.

Die wäßrige Phase kann nach den bekannten Verfahren des Standes der Technik aufgearbeitet werden, um die reinen Säuren, wie beispielsweise Alkylphosphonige Säure zu gewinnen (etwa durch Ionenaustausch oder Destillation).

Bei der vorgenannten Reaktion können vorteilhafterweise auch Gemische von Alkali- und Erdalkalihydroxiden eingesetzt werden, um bei der Reaktion entstehendes Phosphit, beispielsweise als Ca(HPO₃) abzutrennen.

Die Reaktionspartner können auch in anderer Reihenfolge zusammengegeben werden, beispielsweise dadurch, daß man diese kontinuierlich in dem oben definierten Molverhältnis in einen Reaktor (Druckrohr, Druckreaktor oder Kaskade) einträgt und nach Verweilzeiten von 0,5 bis 2 h aus dem Reaktor wieder ausschleust. Die nach der Phasentrennung erhaltene organische Phase, die noch die Hauptmenge des ggf. eingesetzten Phasen-Transfer-Katalysators enthält, wird zweckmäßigerweise recyclisiert.

### Beispiel 1

In einem 5-Liter-Druckreaktor aus Edelstahl wurden 2 l Toluol und 25 g (0,05 Mol) Tributyl-hexadecylphosphoniumbromid vorgelegt und auf ca. 60 °C aufgeheizt. Es wurden 62 g (2 Mol) geschmolzener gelber Phosphor in den Reaktor eingetragen und dann unter starkem Rühren auf 0°C abgekühlt. Anschließend wurden 151 g (3 Mol) Methylchlorid einkondensiert.

Bei 0 °C wurden innerhalb einer Stunde 600 g einer 56 %igen KOH-Lösung (6 Mol KOH) eingepumpt. Die Reaktionswärme wurde durch Kühlen des Reaktormantels abgeführt und die Temperatur im Reaktorinneren während der Zugabezeit auf 0 bis +2 °C gehalten. Nach einstündiger Nachreaktionszeit bei 0 °C wurde auf Raumtemperatur erwärmt und der gesamte Ansatz mit 1 l Wasser verdünnt.

Der Reaktor wurde über eine Verbrennung entspannt, wobei der entstandene Wasserstoff, überschüssiges Methylchlorid und Spuren von gasförmigen Phosphinen (PH₃, MePH₂) verbrannt wurden. Man erhielt als Rückstand zwei homogene flüssige Phasen, die keinen gelben Phosphor mehr enthielten. Die Phasen wurden separiert abgelassen und mittels ³¹P-NMR-Spektroskopie analysiert.

| | wäßrige Phase (Mol%Phosphor) |
|---|---|
| Trimethylphosphanoxid | 2,3 |
| Dimethylphosphinsäure K-Salz | 0,5 |
| Methylphosphonige Säure K-Salz | 64,2 |
| Phosphorige Säure K-Salz | 15,8 |
| Hypophosphorige Säure K-Salz | 14,2 |
| Nicht identifizierte Verbindungen | 3,1 |

### Beispiel 2

Es wurde vorgegangen wie in Beispiel 1, jedoch betrug die Reaktionstemperatur 25 °C. Analyse:

| | wäßrige Phase (Mol% Phosphor) |
|---|---|
| Trimethylphosphanoxid | 2,5 |
| Dimethylphosphinsäure K-Salz | 18,0 |
| Methylphosphonige Säure K-Salz | 54,4 |
| Phosphorige Säure K-Salz | 13,3 |
| Hypophosphorige Säure K-Salz | 6,0 |
| Nicht identifizierte Verbindungen | 5,7 |

### Beispiel 3

In einem 2-Liter-Rührkolben wurden 500 ml Diethylenglycoldiethylether, 13 g (0,026 Mol) Tributylhexadecylphosphoniumbromid und 93 g (1 Mol) n-Butylchlorid vorgelegt. Zu dieser Lösung wurde bei Raumtemperatur eine Lösung von 150 g NaOH (3,75 Mol) in 150 g Wasser zudosiert.

Zu dem kräftig gerührten Zweiphasengemisch tropfte man innerhalb von 1 Stunde bei 0 °C 15,5 g (0,5 Mol) geschmolzenen gelben Phosphor. Nach weiteren 3 h Reaktionszeit separierte man die beiden klaren Phasen und charakterisierte die entstandenen Reaktionsprodukte mittels ³¹P-NMR-Spektroskopie:

| | Wäßrige Phase (Mol% Phosphor) |
|---|---|
| Butylphosphonige Säure Na-Salz | 41 |
| Hypophosphorige Säure Na-Salz | 3 |
| Phosphorige Säure Na-Salz | 56 |
| Nicht identifizierte Verbindungen | < 0,5 |

### Beispiel 4

In einem 5 L Edelstahl-Druckreaktor wurde eine Lösung von 26,1 (0.05 Mol) Tributylhexadecylphosphoniumbromid in 1000 mL Toluol vorgelegt und auf 60°C vorgeheizt. Nach Zugabe von 62 g (2 Mol) gelbem Phosphor wurde unter intensivem Rühren auf -10°C abgekühlt und dann 202 g (4 Mol) Methylchlorid einkondensiert. Danach wurde innerhalb 2 Stunden 400 g 50 Gew.-%ige wässrige Natronlauge zudosiert, wobei die Temperatur auf - 10°C gehalten wurde. Innerhalb einer Stunde wurde 400 g Wasser zugegeben, danach eine weitere Stunde nachgerührt, auf Raumtemperatur erwärmt und anschließend der Reaktor über eine Verbrennung entspannt. Man erhielt zwei homogene flüssige Phasen, die getrennt und analysiert wurden.
Die wäßrige Phase (Auswaage: 920 g) enthielt 65,6 Mol% Methylphosphonige Säure, 14,9 Mol% Phosphorige Säure und 13,7 Mol% Hypophosphorige Säure sowie 2,8 Mol% Dimethylphosphinsäure in Form ihrer Natriumsalzesalze.

### Beispiel 5

In einem 5 L Edelstahl-Druckreaktor wurde eine Lösung von 29 g (0.05 Mol) Tetraoctylphosphoniumbromid in 1000 mL Toluol vorgelegt und auf 60°C vorgeheizt. Nach Zugabe von 62 g (2 Mol) gelbem Phosphor wurde unter intensivem Rühren auf -10°C abgekühlt und dann 202 g (4 Mol) Methylchlorid einkondensiert. Danach wurde auf 20°C erwärmt und innerhalb von 2 Stunden 400 g 50 Gew.-%ige wässrige Natronlauge zudosiert, wobei die Temperatur auf 20°C gehalten wurde. Innerhalb einer Stunde wurde 400 g Wasser zugegeben, danach eine weitere Stunde nachgerührt, auf Raumtemperatur erwärmt und anschließend der Reaktor über eine Verbrennung entspannt. Man erhielt zwei homogene flüssige Phasen, die getrennt und analysiert wurden.
Die wäßrige Phase (Auswaage: 940 g) enthielt 51,2 Mol% Methylphosphonige Säure, 24,7 Mol% Phosphorige Säure und 18,5 Mol% Hypophosphorige Säure sowie 2,6 Mol% Dimethylphosphinsäure in Form ihrer Natriumsalze.

Aus den in den Beispielen 1 bis 5 hergestellten Salzen lassen sich in bekannter Weise die Säuren, beispielsweise durch Ionenaustausch herstellen.

## Patentansprüche

1. Verfahren zur Herstellung von Alkali- und/oder Erdalkalisalzen von Alkylphosphonigen Säuren und Dialkylphosphinsäuren aus elementarem gelbem Phosphor und Alkylhalogeniden, **dadurch gekennzeichnet, daß** die Reaktion in Gegenwart von wäßrigem Alkali- oder Erdalkalihydroxid oder Gemischen davon erfolgt.

2. Verfahren nach Anspruch 1, **dadurch gekennzeichnet, daß** die Reaktion in einem Zwei-Phasen-System aus wäßrigem Alkali- oder Erdalkalihydroxid oder Gemischen davon und einem organischen Lösungsmittel durchgeführt wird.

3. Verfahren nach Anspruch 1 oder 2, **dadurch gekennzeichnet, daß** als Alkylhalogenide Methylchlorid oder Methylbromid eingesetzt werden.

4. Verfahren nach einem oder mehreren der Ansprüche 1 bis 3, **dadurch gekennzeichnet, daß** als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, verwendet werden.

5. Verfahren nach einem oder mehreren der Ansprüche 1 bis 4, **dadurch gekennzeichnet, daß** als organisches Lösungsmittel Toluol, allein oder in Kombination mit Alkoholen, verwendet wird.

6. Verfahren nach einem oder mehreren der Ansprüche 1 bis 5, **dadurch gekennzeichnet, daß** die Reaktion in Anwesenheit eines Phasen-Transfer-Katalysators durchgeführt wird.

7. Verfahren nach Anspruch 6, **dadurch gekennzeichnet, daß** es sich bei dem Phasen-Transfer-Katalysator um Tetraalkylphosphoniumhalogenide, Triphenylalkylphosphoniumhalogenide oder Tetraorganylammoniumhalogenide handelt.

8. Verfahren nach einem oder mehreren der Ansprüche 1 bis 7, **dadurch gekennzeichnet, daß** die Temperatur bei der Reaktion -20 bis +60 °C beträgt.

9. Verfahren nach einem oder mehreren der Ansprüche 1 bis 8, **dadurch gekennzeichnet, daß** die Temperatur 0 bis 30 °C beträgt.

10. Verfahren nach einem oder mehreren der Ansprüche 1 bis 9, **dadurch gekennzeichnet, daß** die Reaktion unter einem Druck von 0 bis 10 bar durchgeführt wird.

11. Verfahren nach einem oder mehreren der Ansprüche 1 bis 10, **dadurch gekennzeichnet, daß** man den gelben Phosphor in einem Lösungsmittel oder einem Lösungsmittelgemisch suspendiert und dann mit einem Alkylhalogenid und einer Verbindung der Formel MOH oder M'(OH)₂ oder Gemischen davon, in denen M ein Alkalimetall und M' ein Erdalkalimetall bedeutet, umsetzt.

12. Verfahren nach einem oder mehreren der Ansprüche 1 bis 11, **dadurch gekennzeichnet, daß** der gelbe Phosphor und das Alkylhalogenid im molaren Verhältnis von 1:1 bis 1:3 miteinander umgesetzt werden, wobei das molare Verhältnis von gelbem Phosphor zur Verbindung der Formel MOH oder M'(OH)₂ 1:1 bis 1:5 beträgt.

13. Verfahren nach einem oder mehreren der Ansprüche 1 bis 12, **dadurch gekennzeichnet, daß** das nach der Umsetzung erhaltene Zwei-Phasen-System separiert und weiterverarbeitet wird.

## Claims

1. A process for preparing alkali metal salts and/or alkaline earth metal salts of alkylphosphonous acids and dialkylphosphinic acids from elemental yellow phosphorus and alkyl halides, which comprises carrying out the reaction in the presence of aqueous alkali metal hydroxide or alkaline earth metal hydroxide or mixtures thereof.

2. The process as claimed in claim 1, wherein the reaction is carried out in a two-phase system of aqueous alkali metal hydroxide or alkaline earth metal hydroxide or mixtures thereof and an organic solvent.

3. The process as claimed in claim 1 or 2, wherein, as alkyl halides, use is made of methyl chloride or methyl bromide.

4. The process as claimed in one or more of claims 1 to 3, wherein, as organic solvents, use is made of unbranched or branched alkanes, alkyl-substituted aromatic solvents, water-immiscible, or only partially water-miscible, alcohols or ethers, alone or in combination with one another.

5. The process as claimed in one or more of claims 1 to 4, wherein, as organic solvent, use is made of toluene, alone or in combination with alcohols.

6. The process as claimed in one or more of claims 1 to 5, wherein the reaction is carried out in the presence of a phase-transfer catalyst.

7. The process as claimed in claim 6, wherein the phase-transfer catalyst is tetraalkylphosphonium halides, triphenylalkylphosphonium halides or tetraorganylammonium halides.

8. The process as claimed in one or more of claims 1 to 7, wherein the temperature in the reaction is from -20 to +60°C.

9. The process as claimed in one or more of claims 1 to 8, wherein the temperature is from 0 to 30°C.

10. The process as claimed in one or more of claims 1 to 9, wherein the reaction is carried out at a pressure of from 0 to 10 bar.

11. The process as claimed in one or more of claims 1 to 10, wherein the yellow phosphorus is suspended in a solvent or a solvent mixture and then reacted with an alkyl halide and a compound of the formula MOH or M'(OH)₂ or mixtures thereof, where M is an alkali metal and M' is an alkaline earth metal.

12. The process as claimed in one or more of claims 1 to 11, wherein the yellow phosphorus and the alkyl halide are reacted with one another in a molar ratio of from 1:1 to 1:3, the molar ratio of yellow phosphorus to the compound of the formula MOH or M'(OH)₂ being from 1:1 to 1:5.

13. The process as claimed in one or more of claims 1 to 12, wherein the two-phase system obtained after the reaction is separated and processed further.

## Revendications

1. Procédé pour la préparation de sels de métaux alcalins et/ou alcalino-terreux d'acides alkylphosphoneux et d'acides dialkylphosphiniques à partir de phosphore jaune élémentaire et d'halogénures d'alkyle, **caractérisé en ce que** la réaction est réalisée en présence de solution aqueuse d'hydroxyde de métaux alcalins ou de métaux alcalino-terreux ou de leurs mélanges.

2. Procédé selon la revendication 1, **caractérisé en ce que** la réaction est réalisée dans un système biphasé constitué d'une solution aqueuse d'hydroxyde de métaux alcalins ou alcalino-terreux ou de mélanges de ceux-ci et d'un solvant organique.

3. Procédé selon la revendication 1 ou 2, **caractérisé en ce qu'**on utilise comme halogénures d'alkyle le chlorure de méthyle ou le bromure de méthyle.

4. Procédé selon une ou plusieurs des revendications 1 à 3, **caractérisé en ce qu'**on utilise comme solvants organiques des alcanes à chaînes linéaires ou ramifiées, des solvants aromatiques substitués par un alkyle, des alcools ou des éthers non miscibles ou seulement partiellement miscibles, seuls ou en combinaison ensemble.

5. Procédé selon une ou plusieurs des revendications 1 à 4, **caractérisé en ce qu'**on utilise comme solvant organique le toluène, seul ou en combinaison avec des alcools.

6. Procédé selon une ou plusieurs des revendications 1 à 5, **caractérisé en ce qu'**on réalise la réaction en présence d'un catalyseur de transfert de phase.

7. Procédé selon la revendication 6, **caractérisé en ce qu'**il s'agit pour le catalyseur de transfert de phase d'halogénures de tétralkylphosphonium, d'halogénures de triphénylalkylphosphonium ou d'halogénures de tétraorganylammonium.

8. Procédé selon une ou plusieurs des revendications 1 à 7, **caractérisé en ce que** la température s'élève de -20 à +60°C pendant la réaction.

9. Procédé selon une ou plusieurs des revendications 1 à 8, **caractérisé en ce que** la température s'élève de 0 à 30°C.

10. Procédé selon une ou plusieurs des revendications 1 à 9, **caractérisé en ce que** la réaction est réalisée sous une pression de 0 à 10 bar.

11. Procédé selon une ou plusieurs des revendications 1 à 10, **caractérisé en ce qu'**on met en suspension le phosphore jaune dans un solvant ou un mélange de solvants et on le met ensuite à réagir avec un halogénure d'alkyle et un composé de formule MOH ou M'(OH)₂ ou leurs mélanges, dans lesquels M représente un métal alcalin et M' un métal alcalino-terreux.

12. Procédé selon une ou plusieurs des revendications 1 à 11, **caractérisé en ce qu'**on met à réagir ensemble le phosphore jaune et l'halogénure d'alkyle dans le rapport molaire de 1 : 1 à 1 : 3, le rapport molaire de phosphore jaune par rapport au composé de formule MOH ou M'(OH)₂ s'élevant de 1 : 1 à 1 : 5.

13. Procédé selon une ou plusieurs des revendications 1 à 12, **caractérisé en ce qu'**après la réaction le système biphasé obtenu est séparé et traité ultérieurement.
